# EUROPEAN PATENT SPECIFICATION

(11) **EP 1 048 164 B1**
(45) Date of publication and mention of the grant of the patent: **07.01.2015**
(21) Application number: 98953133.0
(22) Date of filing: 03.11.1998
(51) Int. Cl.: H04M 3/50

(54) **VOICE MAILBOX IN A GSM-SYSTEM**
SPRACHBRIEFKASTEN IN EINEM GSM SYSTEM
BOITE A LETTRES VOCALE DE SYSTEME GSM

(30) Priority: 06.11.1997 SE 9704057
(43) Date of publication of application: 02.11.2000
(73) Proprietor: TeliaSonera AB, 10663 Stockholm (SE)
(72) Inventor: FRANK, Robert, S-185 32 Vaxholm (SE); WINROTH, Mats, Olof, S-135 54 Tyresö (SE)
(74) Representative: Groth & Co. KB
(86) International application number: PCT/SE1998/001987
(87) International publication number: WO 1999/025108

(56) References cited:
- EP-A1- 0 792 077
- EP-A2- 0 783 219
- US-A- 5 590 178

## Description

### FIELD OF THE INVENTION

The present invention relates to a mobile communication system including mobile terminals with voice mailbox function.

### PRIOR ART

Mobile operators today have the function voice mailbox in their networks, where a voice message can be recorded to a mobile subscriber which is not accessible. The voice mailbox subscriber can have a personal greeting recorded which is played to the calling telephone user, who then can provide a greeting. When the subscriber of the voice mailbox switches on his/her telephone, he/she will have a message, via SMS, that a voice message is to be collected.

It is, however, difficult for a subscriber to give detailed information or information directed to a specific receiver, because the recorded message soon will be of an unwieldy length. The same problem of course applies to the the calling subscriber who shall speak to get a message recorded to the absent subscriber. Especially difficult will it be when complicated information with, for instance, figures, or name difficult to spell, shall be transferred.

The patent document EP-0 783 219, A2 relates in general to message services between telephone devices and in particular to using the number of the calling party for transmitting a message in a situation that the receiving party is busy. In a communication device comprising a message function (SMS) a certain short message or other reply message is sent in response to an incoming call in a situation where the user can't answer the call him/herself. The reply message can be sent immediately or after a short delay, whereby during the delay, the user can choose, whether he/she answers him/herself. The calling party is identified from the CLI information, whereby the reply message can be chosen according to the calling party. Time information can be included in the reply message in order to express at which time by the clock or after a how long time the receiving party is reachable. After that time the automatic reply function based on the reply message is automatically disconnected.

The patent document EP-0 792 077, A1 relates to a multi-service mobile station comprising means for connecting the device by radio to telecommunication network in order to utilize typical mobile station services, such as speech and data services. Additionally, the multi-service mobile station provides means for using various information processing services, such as telefax service and electronic mail service. When using information processing services, the information processed by the user is automatically saved in the memory means of the multi-service mobile station when a certain criterium is met. The criteria are e.g. shifting from one service to another, going over to current saving mode, or, in a two-section multi-service terminal device, folding the device together. Using the WWW pages known from Internet environment, it is also possible to utilize new services still under development, such as weather forecast and betting services.

The patent document US-5, 590, 178 relates to an electronic mail system wherein related electronic mail is automatically displayed when a telephone call is placed. The electronic mail system of the invention is constructed by linking an electronic mail system composed of a plurality of terminals and an electronic mail center, with a telephone system composed of a plurality of telephones and a telephone exchange, the telephones being associated in advance with individual users. The electronic mail center is equipped with means for storing a table of correspondence between user IDs and telephone numbers, a terminal interface capable of identifying the users using the terminals, and a status variable management table for managing status variables by which to recognize the mail currently displayed. The telephone exchange notifies the calling and called telephone numbers to the electronic mail center upon the reception of a call request, and the electronic mail center then identifies the user IDs in accordance with the correspondence table and transmits the related electronic mail for display on the terminals of the calling user and called user.

The aim of the present invention consequently is to provide an extensive, easy to understand, and well structured transfer of information between a calling mobile A-subscriber and a not accessible mobile B-subscriber.

### SUMMARY OF THE INVENTION

This aim is achieved by A mobile communication system including mobile terminals with voice mailbox function, at which mobile-adapted WWW-browsers are implemented in said mobile terminals, and that said voice mailbox function provides one more function in the form of at least one home page which can be downloaded into the WWW-browsers of said mobile terminals.

Because the calling mobile subscriber gets the home page of the not accessible mobile subscriber downloaded in his/her mobile terminal, the calling mobile subscriber will have extensive, well structured, text information regarding the not accessible subscriber.

The calling subscriber then can, by means of the number display of his/her mobile terminal, transmit an extensive text message to the, for the time being, not accessible subscriber. This, of course, will considerably increase the service value of the voice mailbox. Prototypes of mobile terminals, which manage the functionality that the invention requires, already exist. The system may be possible to introduce during 1998.

Further characteristics of the present invention are given in the subclaims.

### DETAILED DESCRIPTION OF AN EMBODIMENT OF THE INVENTION

The invention requires that an information server, where subscribers can download their personal home page with information and hypertext-links, is added to the "common" voice mailbox function. If a GSM-mobile calls a not accessible subscriber, and the home page function is activated in the voice mailbox application, the calling mobile user will have a voice message requesting to wait while the home page is downloaded to the mobile. Downloading can be executed either via SMS or USSD, which both can transfer data at the same time as a call is going on.

Via A-number presentation, the server can transmit an SMS with the home page information to the calling mobile. Via A-number-analysis, the home page function also in most cases can find out whether the calling customer has a GSM-mobile which can receive the home page information (this will not apply if, for instance, personal numbers are introduced, where the same telephone number can be used for a number of different systems). If the A-subscriber-s system can be identified to be a common telephone or, for instance, NMT, the calling customer is always connected to the common voice mailbox.

The mobile subscriber can select which of the two functions that a calling mobile shall reach, either the common voice mailbox, or the home page function, but by means of DTMF-signalling or USSD and voice message, also the calling customer would be able to select which of the functions he/she wants. Another alternative is that a home page is downloaded at the same time as the calling customer listens and uses the absent subscribers classic voice mailbox.

If the GSM-mobile which is calling is of an older type, which does not support the mobile-adapted WWW functionality, it will receive the information as one or more common SMS, where the text will be quite legible. An answer to the absent subscriber then can be written and transmitted as a common SMS to the home page, or directly to the absent subscriber-s mobile. This is solved by the SMS from the home page function containing a "reply requested".

An embodiment of the invention is characterized in:
- that a voice mailbox function can be developed by a server for mobile-adapted WWW-service being connected to the voice mailbox-application, which gives possibility to transmit a home page to the calling subscriber;
- that the voice mailbox subscriber can decide if only classic voice mailbox shall be used, if only home page to calling customer shall be used, if home page shall be transmitted to the mobile at the same time as calling subscriber uses the classic voice mailbox, or if calling subscriber shall be able to select between classic voice mailbox and home page by means of DTMF or USSD-signalling; that the home page function via A-number analysis can decide to which subscriber the home side information shall be transmitted;
- that the home page information is transmitted to the mobile via USSD or SMS, which both can be transmitted while the call is going on;
- that A-number analysis decides whether the calling customer's terminal supports SMS or USSD, so that the home page message is not transmitted to, for instance, a PSTN-subscriber, and that the classic voice mailbox is activated. If the calling customer does not have a GSM-terminal, but yet has similar messaging functionality, for instance IS136 D-APMS and IS95 CDMA, also this can be decided via A-number analysis. That results in that the function is not limited to GSM;
- that a voice mailbox subscriber can have a number of different home pages, for instance one default and some which are aimed at specific calling subscribers which, on basis of A-number analysis, are selected depending on customer. Alternatively, access to certain "hypertext"-links on the home page can be connected to specific A-numbers. In both cases the voice mailbox subscriber can arrange lists with A numbers which are connected to specific information.

The invention can be used to transfer extensive and advanced information to an A-subscriber when a B-subscriber is not accessible. The invention can be used to differentiate the service offering between different operators.

In present implementations of a voice mailbox, information to the A-subscriber consequently only consists of a recorded voice message, whereas a voice mailbox with home page function in addition can transfer text information and "hypertext"-links to more directed information to the calling subscriber.

The above described is only to be regarded as an advantageous embodiment of the invention, and the extent of protection of the invention is only defined by what is indicated in the following patent claims.

## Claims

1. Mobile communication system including mobile terminals with voice mailbox function, **characterized in that** mobile adapted WWW-browsers are implemented in said mobile terminals, and that said voice mailbox function is adapted to provide one or more function in the form of at least one home page which is adapted to be downloaded into the WWW-browser of said mobile terminal, and the mobile communication system includes an information server wherefrom said home page with information about "hypertext"-links is adapted to be downloaded to said mobile terminals, said information server is connected to said voice mailbox function and if one of said mobile subscribers is not accessible at calling, his/her home page is adapted to, together with, or without, "common" voice message, be transferred to said calling subscriber's mobile terminal, and **in that** a mobile telephone subscriber with said voice mailbox function has a plurality of different home pages, said different home pages are aimed at different calling subscribers, which different calling subscribers are identified on basis of A-number analysis.

2. Mobile communication system according to patent claim 1, **characterized in that** said voice mailbox function by A-number analysis decides to which subscriber said home page shall be transmitted.

3. Mobile communication system according to any of the previous patent claims, **characterized in that** said home page is transferred by means of USSD or SMS.

4. Mobile communication system according to any of the previous patent claims, **characterized in that** said voice mailbox function by A-number analysis decides whether calling mobile terminal supports SMS, USSD or not, and if said mobile terminal does not support SMS, or USSD, a common voice message instead of said home page is transferred.

5. Mobile communication system according to any of the previous patent claims, **characterized in that** said calling subscriber by means of DTMF- or USSD signalling decides whether the home page and/or the voice message shall be transferred from an inaccessible mobile subscriber to said calling subscriber's mobile terminal.

6. Mobile communication system according to any of the previous patent claims, **characterized in that** the "hypertext"-links on said home page are connected to different calling subscribers, which subscribers are identified by A-number analysis.

7. Mobile communication system according to the patent claim 6, **characterized in that** said subscriber connected to said voice mailbox function can program his/her voice mailbox function with lists containing A-numbers which shall be connected to different specific home pages or "hypertext"-links.

## Patentansprüche

1. Mobiles Kommunikationssystem, das mobile Terminals mit Sprachmailboxfunktion enthält, **dadurch gekennzeichnet, dass** mobile adaptierte WWW-Browser in den mobilen Terminals implementiert sind und dass die Sprachmailboxfunktion ausgelegt ist zum Liefern einer oder mehrerer Funktionen in der Form mindestens einer Homepage, die ausgelegt ist, um in den WWW-Browser des mobilen Terminals heruntergeladen zu werden, und das mobile Kommunikationssystem einen Informationsserver enthält, von dem die Homepage mit Informationen über "Hypertext"-Links ausgelegt ist, zu den mobilen Terminals heruntergeladen zu werden, der Informationsserver mit der Sprachmailboxfunktion verbunden ist und falls einer der mobilen Teilnehmer beim Anruf nicht erreicht werden kann, seine Homepage ausgelegt ist, um zusammen mit oder ohne einer "gemeinsamen" Sprachnachricht zu dem mobilen Terminal des anrufenden Teilnehmers transferiert zu werden, und dass ein Mobiltelefonteilnehmer mit der Sprachmailboxfunktion mehrere verschiedene Homepages besitzt, wobei die verschiedenen Homepages an verschiedene anrufende Teilnehmer adressiert sind, wobei die verschiedenen anrufenden Teilnehmer auf der Basis einer A-Nummernanalyse identifiziert werden.

2. Mobiles Kommunikationssystem nach Patentanspruch 1, **dadurch gekennzeichnet, dass** die Sprachmailboxfunktion durch A-Nummernanalyse entscheidet, zu welchem Teilnehmer die Homepage übertragen werden soll.

3. Mobiles Kommunikationssystem nach einem der vorhergehenden Patentansprüche, **dadurch gekennzeichnet, dass** die Homepage mittels USSD oder SMS transferiert wird.

4. Mobiles Kommunikationssystem nach einem der vorhergehenden Patentansprüche, **dadurch gekennzeichnet, dass** die Sprachmailboxfunktion durch A-Nummernanalyse entscheidet, ob das anrufende mobile Terminal SMS, USSD unterstützt oder nicht unterstützt und falls das mobile Terminal SMS oder USSD nicht unterstützt, eine gemeinsame Sprachnachricht anstelle der Homepage transferiert wird.

5. Mobiles Kommunikationssystem nach einem der vorhergehenden Patentansprüche, **dadurch gekennzeichnet, dass** der anrufende Teilnehmer mittels DTMF- oder USSD-Signalisierung entscheidet, ob die Homepage und/oder die Sprachnachricht von einem unerreichbaren mobilen Teilnehmer zu dem mobilen Terminal des anrufenden Teilnehmers transferiert werden sollen.

6. Mobiles Kommunikationssystem nach einem der vorhergehenden Patentansprüche, **dadurch gekennzeichnet, dass** die "Hypertext"-Links auf der Homepage mit verschiedenen anrufenden Teilnehmern verbunden werden, wobei die Teilnehmer durch A-Nummernanalyse identifiziert werden.

7. Mobiles Kommunikationssystem nach Patentanspruch 6, **dadurch gekennzeichnet, dass** der mit der Sprachmailboxfunktion verbundene Teilnehmer seine Sprachmailboxfunktion mit Listen programmieren kann, die A-Nummern enthalten, die mit verschiedenen spezifischen Homepages oder "Hypertext"-Links verbunden werden sollen.

## Revendications

1. Système de communication mobile comportant des terminaux mobiles dotés d'une fonction de boîte vocale, **caractérisé en ce que** des navigateurs WWW adaptés au service mobile sont implémentés dans lesdits terminaux mobiles, et **en ce que** ladite fonction de boîte vocale est adaptée à procurer une ou plusieurs fonctions sous la forme d'au moins une page d'accueil adaptée à être téléchargée dans le navigateur WWW dudit terminal mobile, et le système de communication mobile comporte un serveur d'informations depuis lequel ladite page d'accueil avec des informations relatives à des liens "hypertexte" est adaptée à être téléchargée vers lesdits terminaux mobiles, ledit serveur d'informations est connecté à ladite fonction de boîte vocale et, si l'un desdits abonnés mobiles n'est pas accessible lors d'un appel, sa page d'accueil est adaptée, conjointement avec un message vocal "commun" ou sans lui, à être transférée vers le terminal mobile dudit abonné appelant, et **en ce qu'**un abonné de téléphone mobile doté de ladite fonction de boîte vocale dispose d'une pluralité de pages d'accueil différentes, lesdites pages d'accueil différentes sont destinées à des abonnés appelants différents, lesquels abonnés appelants différents sont identifiés sur la base d'une analyse de numéros A.

2. Système de communication mobile selon la revendication 1, **caractérisé en ce que** ladite fonction de boîte vocale décide, par une analyse de numéros A, vers quel abonné ladite page d'accueil doit être transmise.

3. Système de communication mobile selon l'une quelconque des revendications précédentes, **caractérisé en ce que** ladite page d'accueil est transférée au moyen du service USSD ou du service SMS.

4. Système de communication mobile selon l'une quelconque des revendications précédentes, **caractérisé en ce que** ladite fonction de boîte vocale décide, par une analyse de numéros A, si le terminal mobile appelant prend en charge le service SMS, le service USSD ou non et, si ledit terminal mobile ne prend en charge le service SMS ou le service USSD, un message vocal commun est alors transféré à la place de la page d'accueil.

5. Système de communication mobile selon l'une quelconque des revendications précédentes, **caractérisé en ce que** ledit abonné appelant décide, au moyen d'une signalisation DTMF ou USSD, si la page d'accueil et/ou le message vocal doivent être transférés depuis un abonné mobile inaccessible vers le terminal mobile dudit abonné appelant.

6. Système de communication mobile selon l'une quelconque des revendications précédentes, **caractérisé en ce que** les liens "hypertexte" sur ladite page d'accueil sont rattachés à des abonnés appelants différents, lesquels abonnés sont identifiés par une analyse de numéros A.

7. Système de communication mobile selon la revendication 6, **caractérisé en ce que** ledit abonné rattaché à ladite fonction de boîte vocale est capable de programmer sa fonction de boîte vocale avec des listes contenant des numéros A qui doivent être rattachés à des pages d'accueil ou des liens "hypertexte" spécifiques différents.
